Europäisches Patentamt

European Patent Office

Office européen des brevets

(11) Publication number: **0 388 701**

**A2**

# (12) EUROPEAN PATENT APPLICATION

(21) Application number: **90104218.4**

(51) Int. Cl.⁵: **H04L 7/033**

(22) Date of filing: **05.03.90**

(30) Priority: **22.03.89 US 327264**

(43) Date of publication of application:
**26.09.90 Bulletin 90/39**

(84) Designated Contracting States:
**DE FR GB IT**

(71) Applicant: **MOTOROLA INC.**
**1303 East Algonquin Road**
**Schaumburg Illinois 60196(US)**

(72) Inventor: **Howell, William Junior**
**1506 W Alamo Drive**
**Chandler, Arizona 85224(US)**

(74) Representative: **Dunlop, Hugh Christopher et al**
**Motorola European Intellectual Property Operations Jays Close Viables Industrial Estate**
**Basingstoke, Hampshire RG22 4PD(GB)**

(54) **Clock recovery circuit.**

(57) A clock recovery circuit (20) utilizes a Voltage Controlled Oscillator (VCO) (19) having a base frequency which is substantially equal to or slightly less than the rate of a data input signal which allows for very high frequency systems which require data synchronization. A D Flip-Flop (15) provides phase comparison between a recovered clock signal and an incoming data signal, and produces an error signal only when the data signal leads the recovered clock signal. The error signal determines the amount of shift necessary to cause the timing of the recovered clock signal to equal that of the data signal. If the recovered clock signal leads the data signal, the absence of the error signal will cause the recovered clock signal to fall back to its base frequency which is guaranteed to be slightly less than the frequency of the data signal. The clock recovery circuit is only required to make timing adjustments in one direction which greatly simplifies the required circuitry.

FIG. 2

EP 0 388 701 A2

## CLOCK RECOVERY CIRCUIT

Field of the Invention

This invention relates in general to the field of clock recovery circuits and, more particularly, to a clock recovery circuit which will provide an accurate recovered clock signal which does not vary substantially from the original clock signal even when there are relatively long periods between transitions in the received data signal.

Background of the Invention

It is often essential for circuits to communicate synchronously wherein it is not feasible to provide a synchronizing signal as in data transmitters and receivers. The receiving circuit must be able to generate a synchronizing signal (regenerated clock signal) which is in sync with an original clock signal of the transmitting circuit. Furthermore, the regenerated clock signal must be generated based merely on the transitions of the transmitted data signal.

Several circuits have been developed to recover the timing of the original clock signal used in the generation of the transmitted data signal. One such method uses a Phase Locked Loop (PLL) to compare the phase of the received data signal (transmitted data signal) to the phase of a reference clock signal. A recovered clock signal is generated which is adjusted based on the relationship between the reference clock signal and the received data signal. Thus the recovered clock signal may need to be adjusted up or down. Typical problems with this approach includes false phase comparisons generated by noise signals and the complexity of the circuit required.

Another approach is provided by a less complex circuit wherein a digital circuit is provided for receiving the data signal and sampling the signal at a rate of 16 times greater than the transmitting clock signal. This circuit has the advantage of overcoming noise problems by requiring the received data signal to have the same logic level for two clock cycles to be valid (this is possible since the received data signal is sampled 16 times per bit). This circuit, however, depends upon changing logic levels (the transition between logic levels) to reset a 16X clock signal to resync the recovered clock signal. If a low level logic signal is received over many clock cycles, the recovered clock signal may drift substantially from the original clock signal. Furthermore, this type of circuit is unusable in very high frequency circuits due to the requirement of a 16X sampling rate. Reducing the sampling rate also reduces the margin of error wherein in a 16X sampling rate provides accuracy to 3.75 percent.

A further improvement would be to have a circuit in which the regenerated clock signal defaults to a frequency which is guaranteed to run at a slightly slower clock speed in the absence of any transitions of the transmitted data signal so as to always be close to the timing of the original clock signal. Furthermore, when a transition is detected, the adjustment of the recovered clock signal would only be in one direction thereby decreasing the necessary complexity of the circuit. This would also be usable at much higher operating frequencies since a higher sampling rate would not be required.

Thus, what is needed is a clock recovery circuit which will provide an accurate recovered clock signal which does not vary substantially from the original clock signal even when there are relatively long periods between transitions in the received data signal.

Summary of the Invention

Accordingly, it is an object of the present invention to provide an improved clock recovery circuit.

It is a further object of the present invention to provide a clock recovery circuit which only adjusts the speed of the recovered clock signal in one direction.

It is yet a further object of the present invention to provide an improved clock recovery circuit suitable for very high frequency operation.

In carrying out the above and other objects of the invention in one form, there is provided a clock recovery circuit for providing a recovered clock signal which is generated from the transitions of a data input signal. The clock recovery circuit includes an amplifier circuit having an input coupled for receiving the data input signal and having an output for providing a data output signal which is reshaped and amplified. A latching circuit receives the data input signal into a clock input, a recovered clock signal into a reset input, and a data input is coupled for receiving a $V_{DD}$ supply voltage. An output of the latching circuit provides an error signal wherein the error signal is active when the recovered clock signal is lagging the data input signal. The error signal is input into a switchable current source which then provides an up adjust signal when the error signal is in an active state. A Voltage Controlled Oscillator (VCO) responds to the up adjust signal by increasing the frequency of the recovered clock signal at its output. In the absence of the up adjust signal, the recovered clock signal returns to its base frequency of operation. The VCO may be a crystal or ceramic stabilized circuit for providing a very accurate base frequency.

The above and other objects, features, and advantages of the present invention will be better understood from the following detailed description taken in conjunction with the accompanying drawings.

Brief Description of the Drawing

FIG. 1 is a simplified block diagram of the present invention.

FIG. 2 is a block diagram of the preferred embodiment of the present invention.

Detailed Description of the Invention

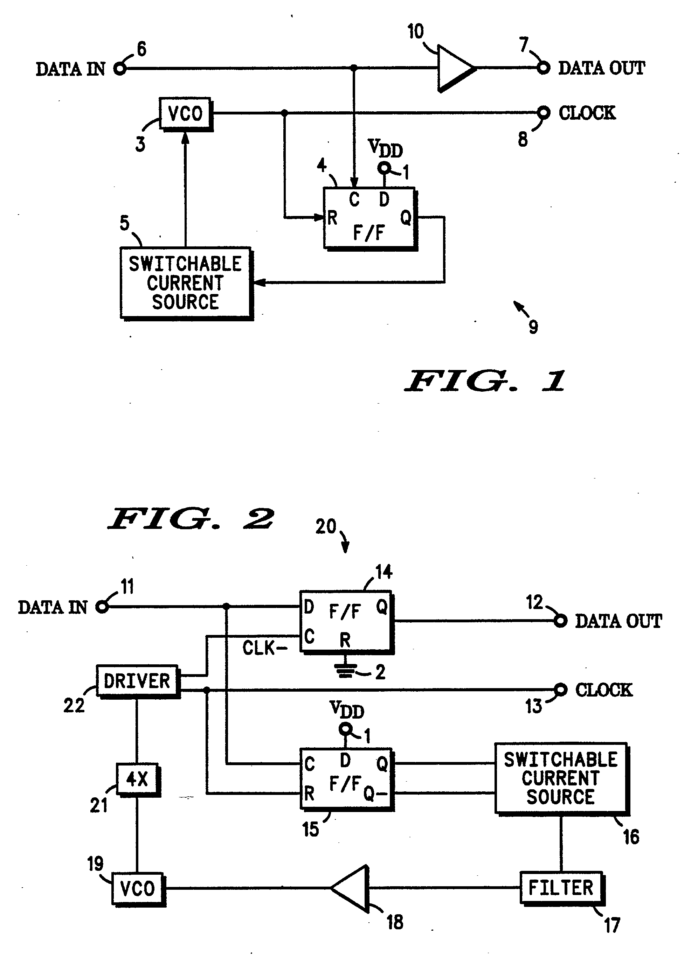

A clock recovery circuit 9 for aligning an on board clock with the rising or falling transitions of a transmitted data signal, which is typically Non Return to Zero (NRZ) or Non Return to Zero Inverted (NRZI), is depicted in FIG. 1. The transmitted data signal is a data signal which is transmitted from a location remote from the clock recovery circuit 9 via any one of several methods well known to those skilled in the art.

In FIG. 1, a data input signal derived from the transmitted data signal and containing only the timing and data information is input at a data in terminal 6 which is connected to the input of an amplifier 10. The output of the amplifier 10 is connected to a data out terminal 7. A Voltage Controlled Oscillator 3 (VCO) is an oscillator wherein the input voltage is varied and its frequency of operation varies accordingly. The frequency of the VCO 3 is set to have a predetermined frequency of operation when its input voltage is zero volts. The predetermined frequency of operation being only slightly less than the frequency of the data input signal. The recovered clock signal from the output of the VCO 3 is connected to a level sensitive reset input of a latch 4 and to a clock terminal 8. The latch 4 shown in FIG. 1 is a D Flip-Flop. The latch 4 has an edge sensitive clock input connected to the data in terminal 6 and a D input connected to the VDD supply voltage 1. An error signal is produced at the Q output of the latch 4 the Q output being connected to the input of a switchable current source 5. An output of the switchable current source 5 provides an up adjust signal that is connected to the input of the VCO 3. The switchable current source 5 is a circuit which provides a charging current at its output to provide a voltage which increases at a predetermined rate based on the error voltage at its input. The switchable current source will also allow the voltage to decrease at a predetermined rate as the error voltage decreases or disappears.

The base frequency of the VCO 3 is kept accurate by the use of a crystal or ceramic stabilized circuit. This is necessary to ensure that the base frequency stays slightly below the rate of the incoming data. If the data input signal leads the recovered clock signal (as when the switchable current source voltage is zero and the recovered clock signal is running at the base frequency), the transition of the incoming data will cause the D input to be clocked to the Q output of the latch 4. The next edge of the recovered clock signal will reset the Q output so that the error signal has a duty cycle based on the time that the data input signal leads the clock recovery signal. The switchable current source 5 will begin to produce the up adjust signal at the input of the VCO 3 causing the recovered clock signal to increase in frequency. The greater the phase difference between the data input signal and the recovered clock signal, the greater the time in which the error signal will be present and hence the higher its average voltage will be. The up adjust signal will increase in magnitude according to the average value of the error signal to further increase the frequency of the recovered clock signal.

If the recovered clock signal begins to exceed the rate of the data input signal, the recovered clock signal will have the Q output reset before the data input signal can clock a data bit through. The error signal will thus stay low causing the up adjust signal to decrease towards a lower voltage. The VCO 3 will decrease in frequency until the data input signal is again leading the recovered clock signal. As a result the recovered clock signal is adjusted up as needed, but allowed to drop back toward the base frequency when it gets to fast. The recovered clock signal need only be checked to see if it lags the data input signal and adjusted up if necessary. When the recovered clock signal rate exceeds the data input signal rate, it is allowed to fall back towards its base frequency value. In effect, this only requires one way adjustment of the recovered clock signal which provides the necessary accuracy while greatly simplifying the required circuitry.

A more complex clock recovery circuit 20 is shown in FIG. 2. A latch 14 has a D input connected to a data in terminal 11, a Q output for providing a clocked data output is connected to a data out terminal 12, and a reset input is connected to a ground supply voltage terminal 2. A latch 15 has a D input connected to a $V_{DD}$ supply voltage terminal 1, a clock input connected to the data in terminal 11, a reset input connected to a clock terminal 13, and complementary outputs Q and Q- connected to the inputs of a switchable current source 16. The switchable current source 16 has an output connected to the input of a filter 17, and the filter 17 has an output coupled to the input of an VCO 19 by an amplifier 18. An output of the VCO 19 is connected to the input of a 4X multiplier 21. An output of the 4X multiplier 21 is connected to the input of a driver 22, and the driver 22 has complementary outputs providing a recovered clock signal which is connected to the clock terminal 13 and an inverted clock signal which is connected to the clock input of the latch 14.

The operation of the clock recovery circuit 20 is similar to that of the clock recovery circuit 9 and is described briefly below. The clock recovery circuit 20, like the clock recovery circuit 9, is suitable for very high frequency operation since the sampling rate of the recovered clock signal is substantially equal to the rate of the data input signal. For example, the VCO 19 could have a base frequency of 31.25 Mhz which would be multiplied 4 times by the 4X multiplier 21 for a data rate of 125 Mhz. If a sampling rate of 16X were required as used in prior art circuits, the circuit would require a maximum frequency of 2 Ghz. This would not be feasible for many technologies and thus a 125 Mhz data rate would not be possible.

The latch 15 provides the phase detector function necessary for comparing the phase of the data input signal at the data in terminal 11 and the recovered clock signal at the clock terminal 13. When the data input signal leads the recovered clock signal an error signal is produced at the Q and Q- outputs of the latch 15. The filter 17 determines the response time of the loop formed between the data in terminal 11 and the clock terminal 13. The filter 17 may have differing charge and discharge times which affects how long it takes the magnitude of the up adjust signal to increase or decrease at the input of the VCO 19. The response time may be used to control the amount of time the recovered clock signal lags the data input in the steady state condition.

The output of the VCO 19 is multiplied by a factor of 4 by the 4X multiplier 21 to match the rate of the recovered clock signal to that of the data input signal. The 4X multiplier 21 is used by way of example and a different multiplication rate may be used as required. The driver 22 provides additional drive for the recovered clock signal and also produces an inverted clock signal. The inverted clock signal clocks the latch 14 to latch the data input signal thereby providing the data out signal near the center of the data input signal timing. This is also by way of example as the recovered clock signal may clock the latch 14.

By now it should be appreciated that there has been provided a clock recovery circuit which will provide an accurate recovered clock signal which does not vary substantially from the original clock signal even when there are few changes in the received data signal.

## Claims

1. A clock recovery circuit (9) for providing a recovered clock signal which is generated from the transitions of a data input signal comprising:
amplifier means (10) having an input (6), coupled for receiving the data input signal, and having an output (7) for providing a data output signal;
latching means (4) having a clock input coupled for receiving the data input signal, a reset input coupled for receiving the recovered clock signal, a data input coupled for receiving a supply voltage, and an output for providing an error signal wherein the error signal is active when the recovered clock signal is lagging the data input signal, the error signal having an average value based on the phase difference between the recovered clock signal and the data input signal;
switchable current source means (5) having an input coupled to the output of said latching means (4) for receiving the error signal, and having an output responsive to the error signal for providing an up adjust signal; and
VCO means (3) having an input coupled to the switchable current source means (5) for receiving the up adjust signal, and having an output (8) for providing the recovered clock signal, the recovered clock signal increasing in frequency relative to the magnitude of the up adjust signal.

2. The clock recovery circuit according to claim 1 wherein said latching means comprises a D flip-flop having a level sensitive reset input and an edge sensitive data input.

3. The clock recovery circuit according to claim 1 further comprising:
a frequency multiplier coupled between the output of said VCO and the reset input of said latching means for multiplying the frequency of the recovered clock signal to the rate of the data input signal; and
a filter coupled between the output of said switchable current source means and the input of said VCO for receiving the up adjust signal, wherein said filter controls the charge and discharge time of the up adjust signal

4. A clock recovery circuit (20) for recovering the timing of a transmitted data signal and generating a recovered clock signal therefrom, wherein the recovered clock signal has a base frequency and is only adjusted for increases in frequency, said clock recovery circuit comprising:

first means (15) having a first input coupled for receiving the transmitted data signal, a second input coupled for receiving the recovered clock signal, and having at least one output for providing an error signal which indicates the phase relationship between the transmitted data signal and the recovered clock signal;

second means (16) having an input coupled for receiving the error signal and having an output for providing an up adjust signal being responsive to the error signal wherein the magnitude of the up adjust signal is a function of the time period for which the error signal is present; and

third means (19) having an input coupled to the output of said second means (16) for receiving the up adjust signal and having an output for providing a recovered clock signal wherein the frequency of the recovered clock signal stays at a predetermined frequency in the absence of the up adjust signal, and increases in frequency as the magnitude of the up adjust signal increases.

5. The clock recovery circuit according to claim 5 wherein said first means comprises:

a D flip-flop (15) having an edge sensitive first input and a level sensitive second input; and

a phase detector (15) generating an average output voltage that is proportional to the phase difference between the data input signal and the recovered clock signal when the data input signal leads the recovered clock signal, and the error signal is zero when the data input signal lags the recovered clock signal.

6. The clock recovery circuit according to claim 6 wherein said second means (16) comprises a switchable current source circuit (16).

7. The clock recovery circuit according to claim 8 further comprising a filter (17) coupled between the output of said switchable current source (16) and the input of said third means (19) for receiving the up adjust signal and controlling the charge and discharge time of the up adjust signal therein providing a modified up adjust signal to the input of said third means.

8. The clock recovery circuit according to claim 9 wherein said third means comprises a VCO (19).

9. The clock recovery circuit according to claim 10 further comprising:

a frequency multiplier (21) coupled between the output of said VCO (19) and the second input of said first means (15) for multiplying the frequency of the recovered clock signal to a rate substantially equal to the rate of the data input signal; and

a driver circuit (22) having an input coupled to said frequency multiplier (21) for receiving a multiplied recovered clock signal and having at least one output for providing an inverted clock signal,

10. A monolithically integrated clock recovery circuit for providing a recovered clock signal from the transitions of a received data signal, comprising:

an input terminal (11) for receiving the data signal;

an output terminal (12) for providing a clocked data signal;

a clock terminal (13) for receiving a recovered clock signal;

a first latch (14) having a data input coupled to said input terminal, a clock input coupled for receiving an inverted clock signal, and an output coupled to said output terminal (12) for providing the clocked data signal to said output terminal (12);

a second latch (15) having a data input coupled to a supply voltage, a clock input coupled for receiving the data signal, a reset input coupled for receiving the recovered clock signal, and having an output for providing an error signal;

a switchable current source (16) having at least one input coupled to the output of said second latch for receiving the error signal, and having an output;

a filter (17) having an input coupled to the output of said switchable current source and having an output;

a VCO (19) having an input coupled to the output of said filter and having an output;

a multiplier (21) having an input coupled to the output of said VCO and having an output; and

a driver (22) having an input coupled to the output of said multiplier (21), a first output coupled to the clock input of said first latch (14) for providing the inverted clock signal, and a second output coupled to the reset input of said second latch (15) and to said clock terminal (13) for providing the recovered clock signal.

FIG. 1

FIG. 2